# EUROPÄISCHE PATENTANMELDUNG

(11) **EP 0 958 772 A2**
(43) Veröffentlichungstag der Anmeldung: **24.11.1999**
(21) Anmeldenummer: 99109818.7
(22) Anmeldetag: 19.05.1999
(51) Int. Cl.: A47J 37/12, A47J 43/28

(54) **Vorrichtung zum Halten von bei einem Fondue zu garenden Lebensmitteln**

(30) Priorität: 20.05.1998 DE 29809153 U
(71) Anmelder: Schuler, Edith, 77960 Seelbach (DE)
(72) Erfinder: Schuler, Edith, 77960 Seelbach (DE)
(74) Vertreter: Goy, Wolfgang, Dipl.-Phys.

(57) **Zusammenfassung**

Die Erfindung betrifft eine Vorrichtung zum Halten von bei einem Fondue zu garenden Lebensmittel. Die Vorrichtung weist ein wannenförmiges Aufnahmegefäß 1 auf, an dem ein Stiel 5 angeordnet ist. Damit die zu garenden Lebensmittel während des Garvorganges nicht aus dem Aufnahmegefäß 1 herausschwimmen können, ist ein Deckel 7 vorgesehen.

## Beschreibung

Die Erfindung betrifft eine Vorrichtung zum Halten von bei einem Fondue zu garenden Lebensmitteln mit einem an einem Stiel angeordneten, wannenförmigen, eine obere Öffnung sowie Durchbrechungen aufweisenden Aufnahmegefäß für die Lebensmittel.

Es gibt die verschiedendsten Sorten von Fondue. Das klassische Fondue ist das Käsefondue. Hier werden Brotstücke in heißen, flüssigen Käse eingetaucht. Zum Aufspießen der Brotstücke dienen Fonduegabeln. Weiterhin gibt es Fleischfondues, bei denen ebenfalls auf einer Fonduegabel aufgespießte Fleischstücke in heißes Öl oder eine Fleischbrühe eingetaucht wird.

Es sind aber auch Fisch- sowie Gemüsefondues bekannt. Hier besteht aber das Problem darin, daß die Fischstückchen nicht ohne weiteres mittels der Fonduegabel aufgespießt und gegart werden können, da der Fisch aufgrund seiner lockeren Konsistenz leicht zerfällt. Gleiches gilt auch für das Gemüse. Aus diesem Grunde werden für diese Lebensmittel sogenannte Siebkellen verwendet. Diese bestehen aus einem wannenförmigen, d.h. nach unten gewölbten Aufnahmegefäß aus einem Drahtgeflecht, an dem ein schräg nach oben weisender Stiel fest angebracht ist. In dieses Aufnahmegefäß werden die Lebensmittel gelegt und mittels dieser Siebkelle in das Garmedium eingetaucht. Das Problem bei diesen Siebkellen besteht darin, daß die darin befindlichen Lebensmittel sehr leicht herausschwimmen können, insbesondere dann, wenn die Kelle in die Garbrühe eingetaucht wird. Diese "verlorengegangenen" Lebensmittel sammeln sich dann im Verlauf des Fondueessens immer mehr in dem Fonduegefäß an.

Davon ausgehend liegt der Erfindung die **Aufgabe** zugrunde, eine Vorrichtung zum Halten von bei einem Fondue zu garenden Lebensmitteln zu schaffen, bei der die in dem Aufnahmegefäß befindlichen Lebensmittel nicht herausschwimmen können.

Als technische **Lösung** wird mit der Erfindung ein Deckel vorgeschlagen, mittels welchem die obere Öffnung des Aufnahmegefäßes abdeckbar ist.

Dadurch ist ein Garkäfig für Fondues aller Art geschaffen, wobei die zu garenden Lebensmittel sicher in diesem Käfig eingeschlossen sind, ohne daß die Gefahr besteht, daß die Lebensmittel herausschwimmen können. Da dieser Garkäfig Durchbrechungen aufweist, wird durch diesen Deckel die Garqualität nicht beeinträchtigt, da die darin befindlichen Lebensmittel nach wie vor von der heißen Brühe oder dem Öl umspült werden. Insgesamt besteht somit mittels der erfindungsgemäßen Haltevorrichtung für die bei einem Fondue zu garenden Lebensmittel nicht die Gefahr, daß sich das Fonduegefäß im Verlauf des Fondueessens immer mehr mit "verlorengegangenen" Lebensmitteln anreichert. Für den Gebrauch ist es lediglich erforderlich, den Deckel vom Aufnahmegefäß abzunehmen, um so die zu garenden Lebensmittel in das Aufnahmegefäß hineinlegen zu können. Anschließend wird der Deckel auf die Öffnung aufgesetzt, um so die Lebensmittel in dem Käfig einzuschließen. Vorzugsweise weist das Material des Garkäfigs eine genußmittelechte Oberflächenveredelung auf. Dadurch ist gewährleistet, daß keine Schadstoffe in die Lebensmittel gelangen.

Vorzugsweise ist der Deckel entweder eben oder nach oben gewölbt.

Eine weitere Weiterbildung schlägt vor, daß der Deckel mit seinem Umfangsrand auf dem Umfangsrand des Aufnahmegefäßes aufliegt. Dadurch ist ein optimaler Abschluß zwischen dem Aufnahmegefäß und dem darauf befindlichen Deckel geschaffen.

Nachdem das Aufnahmegefäß Durchbrechungen aufweist und somit das heiße Öl oder die heiße Brühe hindurchströmen kann, wird in einer Weiterbildung vorgeschlagen, daß der Deckel ebenfalls Durchbrechungen aufweist, damit die in dem Garkäfig befindlichen Lebensmittel von allen Seiten her umspült werden.

Eine weitere Weiterbildung des erfindungsgemäßen Garkäfigs schlägt vor, daß das Aufnahmegefäß sowie der Deckel aus einem Drahtgeflecht oder aus einem glattwandigen Material bestehen, in dem die Durchbrechungen ausgebildet sind.

Es ist denkbar, den Deckel separat vom Aufnahmegefäß oder von dessen Stiel auszubilden. Eine bevorzugte Weiterbildung des erfindungsgemäßen Garkäfigs schlägt aber vor, daß der Deckel entweder am Aufnahmegefäß oder am Stiel gehalten ist. Dadurch wird insgesamt eine Einheit geschaffen, ohne daß die Gefahr besteht, daß der Deckel verlorengeht. Außerdem ist durch die unmittelbare Anordnung des Deckels am Aufnahmegefäß oder am Stiel gewährleistet, daß durch eine kleine Verschiebe- oder Verschwenkbewegung der Garkäfig geöffnet und wieder geschlossen werden kann.

Eine erste technische Realisierung hiervon schlägt vor, daß an dem Deckel eine Führungs- und Halteeinrichtung angeordnet ist, mittels welcher der Deckel mit dem Stiel verbunden sowie bezüglich des Aufnahmegefäßes derart beweglich ist, daß die obere Öffnung des Aufnahmegefäßes frei wird. Diese Weiterbildung hat den Vorteil, daß sich der Garkäfig sehr einfach handhaben läßt. Indem der Deckel dauerhaft, jedoch beweglich am Aufnahmegefäß angeordnet ist, ist es lediglich erforderlich, zum Hineinlegen weiterer zu garender Lebensmittel oder zum Herausnehmen bereits gegarter Lebensmittel den Deckel entweder von der Oberseite des Aufnahmegefäßes wegzuschwenken oder hochzuschieben oder beides.

Eine konkrete technische Realisierung dieser Anordnung des Deckels schlägt vor, daß die Führungs- und Halteeinrichtung ein Rohr ist. Dieses Rohr ist längs des Stiels verschiebbar, so daß durch eine Nachobenbewegung des Rohrs längs des Stiels der Deckel von dem Aufnahmegefäß abgehoben wird. Gleichzeitig kann das Rohr auf dem Stiel zusammen mit dem Deckel seitlich weggedreht werden. Insgesamt ist mittels dieses Rohres eine universelle Handhabe für den Deckel geschaffen, welche es dem Nutzer sehr einfach macht, den Deckel zu entfernen sowie anschließend wieder für den Garvorgang auf das darunter befindliche Aufnahmegefäß aufzusetzen. Eine Weiterbildung hiervon schlägt vor, daß das Rohr insbesondere am oberen Ende einen Haken aufweist. Dieser Haken kann als zusätzliche Handhabe für die Verschiebebewegung sowie gegebenenfalls Drehbewegung des Rohres dienen. Außerdem hat der Haken den Vorteil, daß der Garkäfig in das Fonduegefäß zur Stabilisierung seiner Position am Rand eingehängt werden kann.

Eine zweite Variante in der Anordnung des Deckels am Garkäfig schlägt vor, daß der Deckel mittels wenigstens eines Halteringes im Bereich der Befestigung des Stieles am Aufnahmegefäß gehalten ist. Dies stellt eine technisch sehr einfache und kostengünstige Variante für die Deckelhalterung mit vorzugsweise zwei Halteringen dar, wobei die beiden Halteringe vorzugsweise beidseits des Stiels liegen. Dadurch kann der Deckel zum Öffnen des Garkäfigs auf einfache Weise insbesondere mit der Gabel als Hilfsmittel kurzzeitig nach oben verschwenkt werden.

Eine dritte Variante schlägt vor, daß der Deckel im Bereich der Befestigung des Stieles am Aufnahmegefäß mittels eines Scharniers verschwenkbar ist. Dadurch ist eine einwandfreie Öffnungsbewegung des Deckels am Aufnahmegefäß gewährleistet.

Um den Deckel einfach verschwenken zu können, weist er vorzugsweise einen Verschwenkhebel auf. Durch Betätigen dieses Verschwenkhebels kann der Deckel geöffnet und wieder geschlossen werden.

Eine konkrete technische Realisierung hiervon schlägt schließlich vor, daß der Stiel eine federnde Zunge aufweist, welche mit dem Verschwenkhebel verbunden ist. Vorzugsweise ist dabei das obere Ende des Stiels als Feder zurückgeführt. Indem somit die beiden Stielelemente zusammengedrückt werden, wird gleichzeitig auch über den Verschwenkhebel der Deckel in die Öffnungsstellung übergeführt. Wird die federnde Zunge des Stiels wieder losgelassen, kehrt der Deckel in seine geschlossene Stellung des Garkäfigs zurück.

Drei Ausführungsbeispiele eines erfindungsgemäßen Garkäfigs werden nachfolgend anhand der Zeichnungen beschrieben. In diesen zeigt:
- Fig. 1: eine Seitenansicht des Garkäfigs des ersten Ausführungsbeispieles;
- Fig. 2: eine entsprechende Seitenansicht der Grund-Käfigeinheit des Garkäfigs in Fig. 1;
- Fig. 3: eine dazu korrespondierende Seitenansicht der Deckel-Verschiebe-Käfigeinheit;
- Fig. 4: eine Seitenansicht des Garkäfigs des zweiten Ausführungsbeispieles;
- Fig. 5: eine Seitenansicht des Garkäfigs des dritten Ausführungsbeispieles.

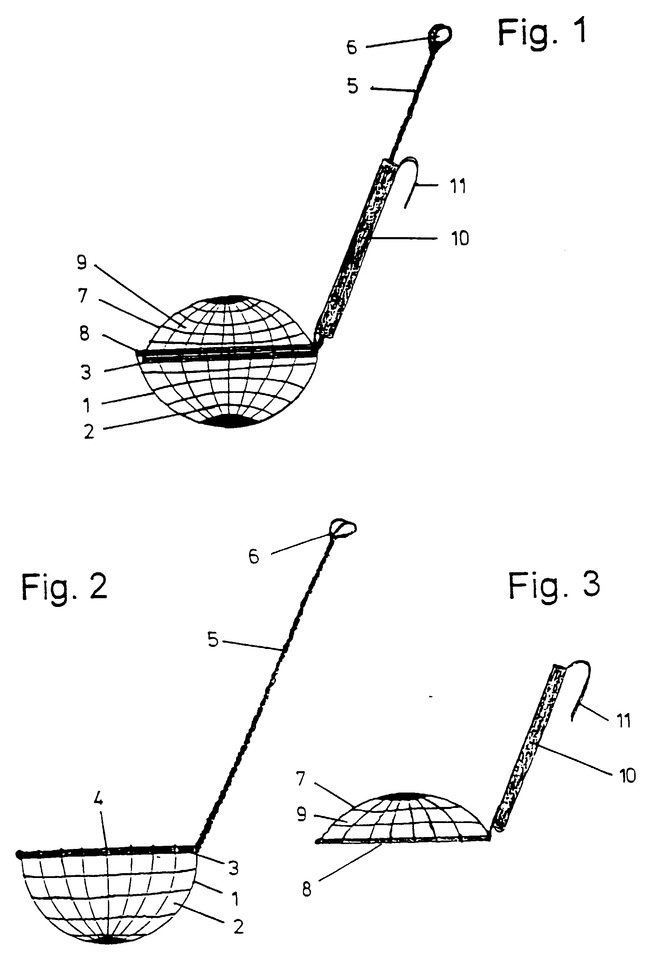

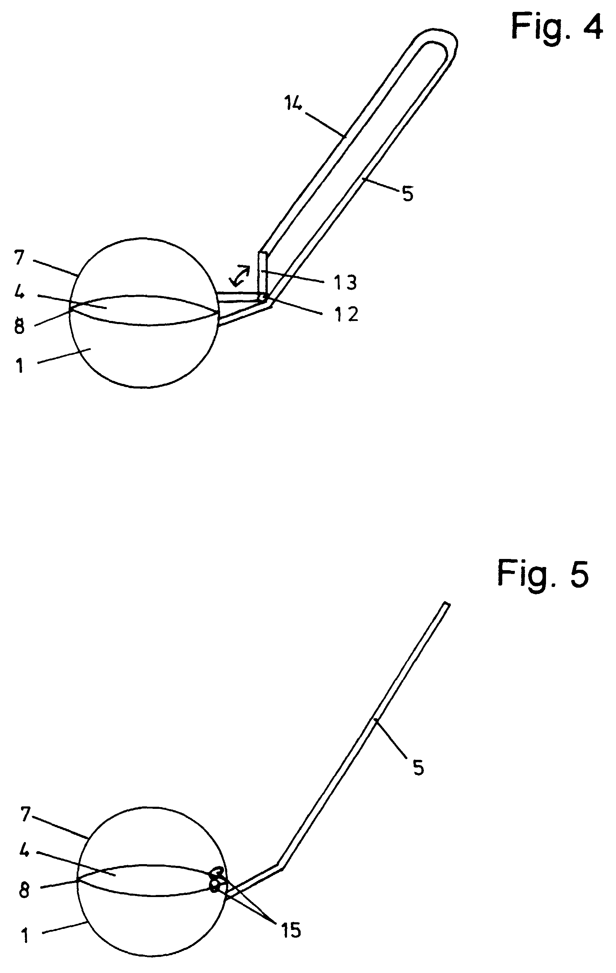

In den Fig. 1 bis 3 ist eine erste Ausführungsform, in Fig. 4 eine zweite Ausführungsform und in Fig. 5 eine dritte Ausführungsform eines Garäfigs dargestellt.

Der Garkäfig der Fig. 1 bis 3 weist ein wannenförmiges Aufnahmegefäß 1 aus einem Drahtgeflecht insbesondere aus Metall auf, wobei das Material eine Oberflächenveredelung besitzt, welche als Genußmittel zulässig ist. Dieses wannenförmige Aufnahmegefäß 1 weist durch das Drahtgebilde Durchbrechungen 2 sowie einen oberen Umfangsrand 3 auf, welche eine obere Öffnung 4 des Aufnahmegefäßes 1 definiert. An diesem oberen Umfangsrand 3 des Aufnahmegefäßes 1 ist schräg nach oben weisend ein Stiel 5 aus Draht oder Massivmetall angeordnet. Dieser Stiel 5 weist am oberen Ende eine Farbkennzeichnung in Form eines daran befestigten Körpers 6 auf.

Der Garkäfig weist weiterhin einen Deckel 7 ebenfalls aus einem Drahtgeflecht auf. Dieser Deckel 7 ist nach oben gewölbt und weist unterseitig eine zu dem Umfangsrand 3 des Aufnahmegefäßes 1 korrespondierenden Umfangsrand 8 auf. Das Drahtgeflecht definiert entsprechend zu den Durchbrechungen 2 des Aufnahmegefäßes 1 ebenfalls Durchbrechungen 9 auf. An dem unteren Umfangsrand 8 des Deckels 7 ist ein Rohr 10 angebracht, welches am oberen Ende einen Haken 11 aufweist. Der Anstellwinkel dieses Rohres 10 bezüglich zur durch den Umfangsrand 8 definierten Ebene ist gleich dem Winkel zwischen der Ebene der oberen Öffnung 4 des Aufnahmegefäßes 1 und dem Stiel 5.

Die Funktionsweise des Garkäfigs dieser ersten Ausführungsform ist wie folgt:

Der Deckel 7 ist mit seinem Rohr 10 auf den Stiel 5 des Aufnahmegefäßes 1 aufgesteckt. Da die Länge des Rohres 10 kürzer ist als die Länge des Stiels 5, ist das Rohr 10 - und damit der Deckel 7 - längs des Stiels 5 verschiebbar, so daß durch eine Nachobenbewegung des Rohrs 10 der Deckel 7 vom darunter befindlichen Aufnahmegefäß 1 abgehoben wird. Gleichzeitig ist es auch möglich, den Deckel durch Drehen des Rohres 10 auf dem Stiel 5 seitlich wegzudrehen. Dadurch können die in dem Fondue zu garenden Lebensmittel in das Aufnahmegefäß 1 hineingelegt und nach Schließen des Deckels 7 in das Fondue eingetaucht und gegart werden.

Die zweite Ausführungsform des Garkäfigs in Fig. 4 weist ebenfalls ein Aufnahmegefäß 1 mit einem Stiel 5 auf. Die Besonderheit liegt in der Anordnung des Deckels 7. Dieser ist im Bereich des unteren Endes des Stiels 5 mittels eines Scharniers 12 verschwenkbar. Dabei weist der Deckel 7 auf der anderen Seite des Scharniers 12 einen nach oben ragenden Verschwenkhebel 13 auf. Der Stiel 5 ist insgesamt U-förmig ausgebildet, wobei der nach unten weisende Schenkel als federnde Zunge 14 ausgebildet ist, welche mit ihrem unteren Ende am oberen Ende des Verschwenkhebels 13 angreift.

Die Funktionsweise des Garkäfigs dieser zweiten Ausführungsform ist wie folgt:

Zum Öffnen des Deckels 7 drückt der Benutzer die federnde Zunge 14 des Stiels 5 hin zum eigentlichen Grundkörper des Stiels 5. Dadurch wird der Verschwenkhebel 13 und damit der Deckel 7 um das Scharnier 12 herum nach oben verschwenkt, so daß der Garkäfig geöffnet ist. Nach Hineinlegen der zu garenden Speise wird die federnde Zunge 14 losgelassen, so daß der Deckel 7 wieder in seine Schließstellung zurückkehrt

Der Garkäfig der dritten Ausführungsform in Fig. 5 schließlich weist ebenfalls ein Aufnahmegefäß 1 mit Stiel 5 auf. Die Besonderheit liegt in der Halterung des Deckels 7. Bei dieser Ausführungsform sind zwei Halteringe 15 vorgesehen, welche beidseits des Stiels 5 angeordnet sind und das Aufnahmegefäß 1 mit dem Deckel 7 verbinden. Dadurch ist eine technisch einfache Schwenklagerung für den Deckel 7 geschaffen. Zum Öffnen des Garkäfigs wird der Deckel 7 nach oben geschwenkt. Nach Einfügen der zu garenden Speise kann der Deckel 7 dann wieder losgelassen werden, so daß er auf dem Aufnahmegefäß 1 zu liegen kommt.

### Bezugszeichenliste

- 1: Aufnahmegefäß
- 2: Durchbrechung
- 3: Umfangsrand
- 4: Öffnung
- 5: Stiel
- 6: Körper
- 7: Deckel
- 8: Umfangsrand
- 9: Durchbrechung
- 10: Rohr
- 11: Haken
- 12: Scharnier
- 13: Verschwenkhebel
- 14: federnde Zunge
- 15: Haltering

## Patentansprüche

1. Vorrichtung zum Halten von bei einem Fondue zu garenden Lebensmitteln mit einem an einem Stiel (5) angeordneten, wannenförmigen, eine obere Öffnung (4) sowie Durchbrechungen (2) aufweisenden Aufnahmegefäß (1) für die Lebensmittel,
**gekennzeichnet durch**
einen Deckel (7), mittels welchem die obere Öffnung (4) des Aufnahmegefäßes (1) abdeckbar ist.

2. Vorrichtung nach dem vorhergehenden Anspruch,
dadurch gekennzeichnet,
daß der Deckel (7) entweder eben oder nach oben gewölbt ist.

3. Vorrichtung nach einem der vorhergehenden Ansprüche,
dadurch gekennzeichnet,
daß der Deckel (7) mit seinem Umfangsrand (8) auf dem Umfangsrand (3) des Aufnamegefäßes (1) aufliegt.

4. Vorrichtung nach einem der vorhergehenden Ansprüche,
dadurch gekennzeichnet,
daß der Deckel (7) ebenfalls Durchbrechungen (9) aufweist.

5. Vorrichtung nach einem der vorhergehenden Ansprüche,
dadurch gekennzeichnet,
daß das Aufnahmegefäß (1) sowie der Deckel (7) aus einem Drahtgeflecht oder aus einem glattwandigen Material bestehen, in dem die Durchbrechungen (2, 9) ausgebildet sind.

6. Vorrichtung nach einem der vorhergehenden Ansprüche,
dadurch gekennzeichnet,
daß der Deckel (7) entweder am Aufnahmegefäß (1) oder am Stiel (5) gehalten ist.

7. Vorrichtung nach Anspruch 6,
dadurch gekennzeichnet,
daß an dem Deckel (7) eine Führungs- und Halteeinrichtung angeordnet ist, mittels welcher der Deckel (7) mit dem Stiel (5) verbunden sowie bezüglich des Aufnahmegefäßes (1) derart beweglich ist, daß die obere Öffnung (4) des Aufnahmegefäßes (1) frei wird.

8. Vorrichtung nach Anspruch 7,
dadurch gekennzeichnet,
daß die Führungs- und Halteeinrichtung ein Rohr (10) ist.

9. Vorrichtung nach Anspruch 6,
dadurch gekennzeichnet,
daß der Deckel (7) mittels wenigstens eines Halteringes (15) im Bereich der Befestigung des Stieles (5) am Aufnahmegefäß (1) gehalten ist.

10. Vorrichtung nach Anspruch 6,
dadurch gekennzeichnet,
daß der Deckel (7) im Bereich der Befestigung des Stieles (5) am Aufnahmegefäß (1) mittels eines Scharniers (12) verschwenkbar ist.

11. Vorrichtung nach Anspruch 10,
dadurch gekennzeichnet,
daß der Deckel (7) einen Verschwenkhebel (13) aufweist.

12. Vorrichtung nach Anspruch 11,
dadurch gekennzeichnet,
daß der Stiel (5) eine federnde Zunge (14) aufweist, welche mit dem Verschwenkhebel (13) verbunden ist.
